# EUROPEAN PATENT SPECIFICATION

(11) **EP 0 764 113 B1**
(45) Date of publication and mention of the grant of the patent: **10.02.1999**
(21) Application number: 95922442.9
(22) Date of filing: 19.06.1995
(51) Int. Cl.: B65B 25/06, B65B 35/10

(54) **A METHOD AND A SYSTEM FOR FORMING WEIGHED PORTIONS OF FOODSTUFF ARTICLES ARRANGED IN AN ORDERLY PATTERN**
VERFAHREN UND SYSTEM ZUM BILDEN VON GEORDNETEN, ABGEWOGENEN UND PORTIONIERTEN NAHRUNGSMITTELN
PROCEDE ET SYSTEME POUR FORMER DES PORTIONS PESEES D'ARTICLES ALIMENTAIRES DISPOSES SUIVANT UN CERTAIN ORDRE

(30) Priority: 17.06.1994 DK 71694
(43) Date of publication of application: 26.03.1997
(73) Proprietor: SCANVAEGT A/S, DK-8200 Aarhus N (DK)
(72) Inventor: GRUNDTVIG, Lars, DK-8220 Brabrand (DK); SKOVSGARD, Jesper, DK-8660 Skanderborg (DK)
(74) Representative: Skoett-Jensen, Knud
(86) International application number: DK9500253
(87) International publication number: WO9535238

(56) References cited:
- EP-A- 0 428 361
- EP-A- 0 634 325
- DE-A- 3 733 945
- FI-B- 83 059
- US-A- 3 820 428

## Description

The present invention relates to a method and a system for forming weighed portions of foodstuff articles arranged in an orderly pattern, e.g. slices of salmon or ham placed in imbricated formation on a carrier plate. This kind of grouping or laying out is normally effected purely manually, when the packings are wanted to exhibit a predetermined weight, inasfar as towards the end of the laying out of a portion it may be required to select articles with a noticeable overweight or subweight in order to reach the desired total weight. It is known that relevant slice cutting machines may be provided with an equipment for automatically laying out the successively cut slices on carrier plates, which are currently displaced for achieving the desired result, but normally this method will be limited to the laying out of a specific number of consecutive slices, whereby the weight of the packings may vary considerably, all according to the size of the slices, which size will normally vary throughout the cuttings of the consecutive foodstuff units.

It is the purpose of the invention to provide a method enabling an improved, automatically controlled grouping of articles such as the said slices in a weight controlled manner, preferably into ordered groups of a predetermined weight.

The invention, when analyzed, can be considered built on the consideration that it is possible to solve one part of the problem or purpose by means of a known distribution technique, viz. a selective supply of single and singularly weighed articles for a current building up, in different receiver stations, of a plurality of article portions with a known or predetermined total weight, while the remaining part of the problem or purpose can be solved, in principle, by using the type of grouping means already mentioned to be known from certain cutting machines, only now being used in the plural in one processing unit, viz. one at each receiver station. It is an essential contribution that the receiver stations are thus used not only for receiving the articles, but also for further individual handling or processing in the separate receiver stations.

The said technique for the building up of article portions is exercised in so-called 'graders' or batching systems comprising a feeding belt which receives the articles one by one and conveys them over a dynamic weigher, such that each article is weighed while moving and the weighing results are registered in a computer. Thereafter the articles are brought further along a sorting stretch having at one or both sides a row of receiver containers, while above the stretch selectively actuatable ejector or diverter means are provided, which may be controlled by the computer for delivery of specific articles to specific receiver containers. Thus, the computer will know currently how many articles are present in the single containers, as well as the weight of the collected portions therein, and with the use of suitable control programmes the computer will then be able to join together articles of more or less different weight into single containers such that they summarize into portions of the desired final weight. The portions are let out as soon as they are finished, and the emptied containers may be used again immediately thereafter.

Thus, the flow of articles will be distributed to a number of receiver stations on a weight controlled basis, and the salmon slices mentioned as an example will be good candidates to be portioned out in accordance with this basic principle, already if they could be delivered in unordered heaps, even though they are not particularly easy to handle for a safe and orderly delivery.

However, as already mentioned, it is a possibility according to the invention to arrange for such a delivery and pick-up function that the articles at the single receiver stations may be guided in a well controlled manner for the formation of the desired grouping on a relevant carrier plate, e.g. cardboard pieces as far as the salmon slices are concerned. A portioning with imbricated formation may be effected, as by the known cutting machines, by a successive slice delivery to an e.g. stepwise moved carrier plate, with the difference, however, that this motion should not take place with some constant frequency, but in direct dependence of each new article arrival, these arrivals being likely to occur rather irregularly and not regularly as from the cutting machine.

The carrier plates or supports, on which the slices are caused to be deposited, should not necessarily be the final carrier plates as present in the final packings, as the laying out could be done on fixed plate means with a following collective transfer of the slices to the final carrier. On the other hand, it is highly advantageous to arrange the slices directly on the final carrier plates, which may be fed automatically from respective magazines.

Once machinery is used for distributing the weighed slices and for displacing the receiver plates there will be many possibilities of arranging the slices in different patterns, even in a circular row. Thus, by way of example, the system may be programmed to lay out first some transverse rows of small pieces and then some large pieces in one longitudinal row, or one row of large pieces in one direction and another, parallel row of small pieces in the opposite direction, or even large pieces in a star pattern. Normally, however, the straight one row pattern will be preferred.

It should be mentioned that US-A-3,820,428 discloses a method and apparatus for producing weight controlled stacks of counted slices cut from a downwardly conveyed food product string, the cut slices falling down to form a stack on a support belonging to a weighing system. Means are provided for removing the stack from the support in response to a weight signal. The slices are not individually weighed or selectively distributed, and they are not arranged in any other pattern, than given by the mere piling by falling onto each other.

In the following the invention is described in more detail with reference to the drawing, in which:-
Fig. 1 is a schematic top view of a system according to the invention, while
Figs. 2-7 are illustrations of different examples of applicable transfer systems.

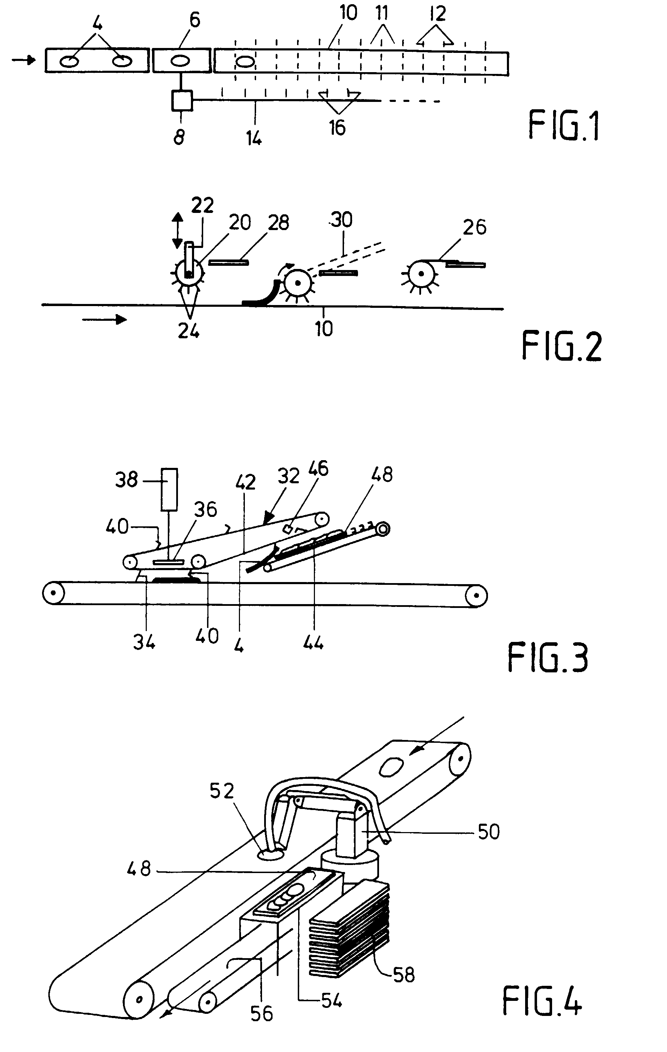

Fig. 1 shows a feeding belt 2, which, in any suitable manner, is supplied with mutually spaced, single articles 4 desired to be controlled in portions of one or more specified weights. The articles thereafter pass over a dynamic weigher 6, where their weight and relative position are registered in a computer 8. The articles are then transferred to a longer belt 10, along which there is mounted a row of receiver stations 11, illustrated by partition lines 12 only. It is also shown that the computer 8 has an exit control wire 14 with branches 16 to the single receiver stations, this referring to the computer being able to actuate a transfer device at each of the stations 11 for transferring a selected article 4 to just that station. The computer holds information of the partial weights hereby delivered to the respective stations and the total article weight present in each station. As soon as the total weight in a given station corresponds to the desired portion weight, the computer arranges for an emptying of that portion, to an underlying conveyor belt for bringing the portion to a non-illustrated final packing station.

Articles of a weight making them unsuitable to participate in the portion formation, e.g. if they are too light to placeable as the last article in one of the otherwise filled receiver containers, may be let out to the last container or just be moved out over the end of the belt 10, subject to being recirculated.

Now, according to the invention these receiver containers should be replaced by local portioning and grouping stations satisfying more basic conditions.
1) They shall comprise means for achieving a safe, selectively controlled and well ordered transfer of articles from the belt 10;
2) They shall comprise means for securing that the transferred articles are delivered in an orderly manner for infeed into the very grouping station; and
3) They shall comprise a grouping system operable to effectively handling articles delivered thereto with highly varying intervals of time.

The invention has been developed almost in spite of a basic knowledge of the fact that the diverter or ejector means conventionally used is portioning machines of the type shown in Fig. 1 are highly unsuitable for the present purpose, at least as far as salmon slices are concerned, but also in respect of other thin and sticky articles. With the use of inclined scrapers the articles will curl together and even remain sticking to the scraper, and a real ejector action on the articles will make these very much deformed and impossible to catch in a reasonably orderly manner. Therefore, the very removal of the articles from the belt according to the above item 1) is one basic problem to be solved, and as will be clear from the following this may even lead to solutions, in which the removing means are integrated in the conveyor 10 itself. In these cases, the removing means will not be specific for the single receiving stations, but rather specific for the conveyor.

If the belt 10 is desired to be kept as a usual conveyor belt it is decisive that the single grouping stations be provided with special means for removing the articles from the belt. As shown in Fig. 2 such means may comprise overhead rollers 20 mounted in a hight displaceable manner in guides 22 and provided with radially displaceable gripping needles 24, which, in the lowered position of the associated roller, protrude downwardly to the top side of the belt 10, while the same needles during the further rotation of the roller in clockwise direction are successively retracted into full retraction at the top side of the roller. Consequently, an article 4 conveyed on the belt 10 will be hit by the lower needles 24 as moved rearwardly of the conveying direction, whereby the front edge of the article is compulsory lifted and gripped by or on the needles, which will thereafter "roll" the article up to the top side of the roller, where now the needles are retracted to or beyond the surface of the roller. Hereby a short scraper blade 26 will be able to scrape off the flat article from the roller and guide it to a longitudinally or transversely directed conveyor belt 28, whereby the problem of the above item 1) will be solved. A longitudinal orientation of the conveyor 28 is shown in dotted lines at 30, conveying obliquely upwardly, whereby the picked up articles 4 can be delivered to upper, receiving grouping stations, without these taking up space between the rollers 20. Control means are provided for lowering the relevant rollers at the relevant moments of time for the selective article picking up.

In connection with the invention it will be an at least theoretical possibility that there is arranged, on the belt 10, an orderly picking up of the articles 4 by means of razor blade sharp scraper plates, but at least for the present this is considered to be unrealistic.

Fig. 3 illustrates another system for an orderly take up of articles 4 from a conventional belt 10. The system comprises an overlying belt 32, which, along a lower stretch 34, runs parallel with and in synchronism with the belt 10. The belt 32 may consist of parallel narrow belts, and overhead the stretch 34 is mounted a pressure plate 36 on a piston rod connected to a fixed cylinder 38. The belt 32 is provided with suitably interspaced, projecting, hook-like needles 40, which, by means of the pressure plate 36 being forced downwardly, may be forced down into gripping engagement with an article 4 at a front area thereof, whereafter the article, now hanging in the hook 40, is driven upwardly along a forwardly and upwardly inclined belt stretch 42. This stretch runs in parallel with a support plate or frame 44, against which the downhanging end of the gripped article will be supported. At the top of the stretch 42 is provided a unit 46, which operates to produce a retraction or a rearward pivoting of the needle hook 40, which is thereby rapidly drawn out of its engagement with the front edge area of the article 4.

As the lower part of the article will already be free of the belt 32 no particular adhesion problems will be encountered, and also the foremost end portion will now be laid down on the support 44.

Hereby the article 4 will be transferred in an orderly manner from the belt 10 to the part 44, and thereafter the article may then, in more different manners, be further conveyed from this part, by way of example by means of a laterally oriented conveyor equipment. However, in Fig. 3 is indicated a preferred arrangement, whereby the part 44 is used for movably supporting a carrier plate 48, which, e.g. from a side position is introduced into a lower start position, in which the top edge of the first article 4 is laid off relatively close to the top edge of this plate. Thereafter a non-illustrated mechanism will serve to shoot the plate 48 a distance upwardly corresponding to the desired length displacement between articles 4 placed with imbricated formation, such that the next and the following articles will be deposited with just the desired positioning on the the plate 48. When this plate is fully covered, it is moved out in any suitable manner upwardly or laterally, now holding a predetermined total weight of the articles, and then a new carrier plate 48 may be supplied to the support structure 44.

It will be appreciated, generally that in accordance with the invention the totalled portion weight will refer to the weight of the articles 4, without comprising the weight of the carrier plate 48 as forming part of the final packing, i.e. the final weight indication will be highly real.

According to the invention it will be possible to work with another group of solutions, based on the use of suction cups for lifting off the articles from the belt 10 and depositing them in an orderly manner on the relevant support. However, in that case it will normally be a condition that the belt 10 is adapted to the purpose in not being smooth as otherwise desirable, e.g. in being granulated or finely perforated, for example consisting of a net material or of thin cords located closely side by side, such that the articles 4 cannot adhere to a smooth surface, from which they would be difficult to lift by suction from above.

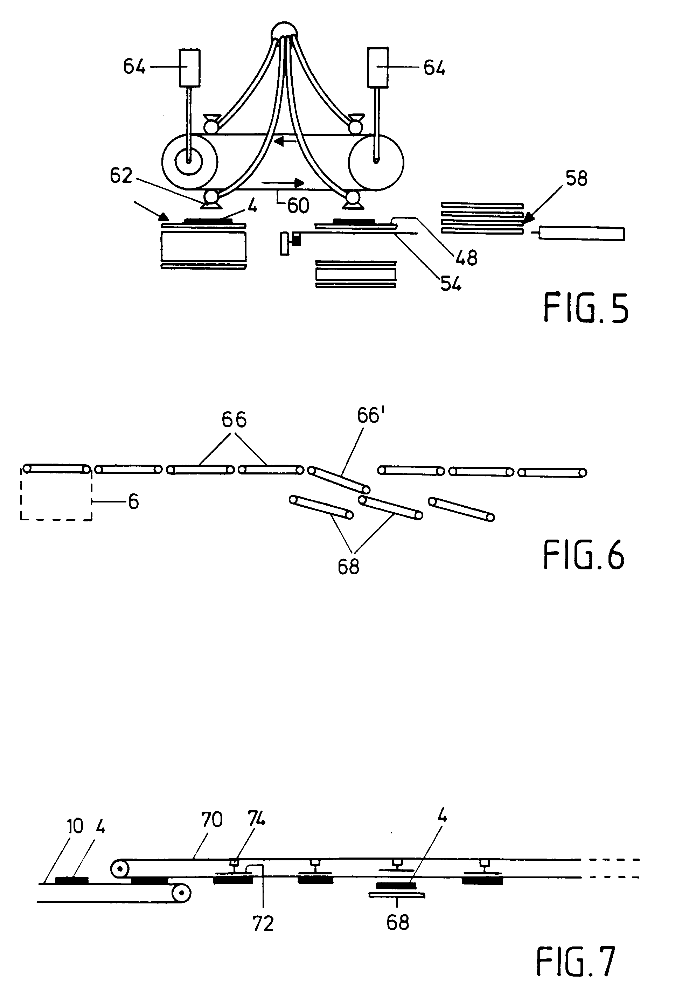

A possible solution of this category is indicated in Fig. 4, where the net belt 10 passes a row of robot units 50 provided with one or more suction cups 52 which, by actuation of the single robot, may be moved inwardly and downwardly for gripping a selected article 4 passing on the belt, and lifting it off for delivery to a carrier plate 48. The robot itself may take care of arranging the successively picked up articles with the desired grouping pattern, but also here it is a possibility that the articles be deposited in a uniform manner on a plate 48, which, on a suitable support is displaced a step for each transfer operation. When the plate is filled up it can be discharged via a conveyor 56, whereafter a new plate is supplied from a magazine 58.

Fig. 5 illustrates another solution of a corresponding type, where at each receiver station there is mounted a transversely oriented belt 60 carrying outwardly projecting suction cups 62, which, in the lower run, are moved first across the belt 10 and then further across a receiver station provided with an inserted carrier plate 48. The belt structure 60 can be raised and lowered e.g. by means of cylinders 64, whereby it can be actuated for the discussed selective gripping of article and lifting the same out for deposit on the plate 48. When the latter is displaced stepwise on its support 54 an imbricated grouping is directly achievable, and also here new plate members 48 may be supplied from a magazine 58.

Fig. 6 illustrates a further and basically different solution principle, by which the main belt conveyor 10 is modified for achieving that it is this conveyor itself which carries out the selective diversion of the articles to the respective receiver stations. As shown, the conveyor is made of a row of individual conveyor sections 66 which are each - in a manner not further illustrated - operable to be swung down at their front end 66', whereby it is possible for the single sections to effect a selective feeding of articles 4 to respective underlying receiver units 68, which may be units for longitudinal or transverse step displacement of article carrier plates 48, whereby the desired result is directly achievable. For that sake, the segments 66 could be upwardly pivotable as well, for delivery to receivers arranged overhead the belt 10,66, or even both up- and downwardly pivotable to upper and lower stations, respectively; from a capacity point of view this would correspond to a selective double sided delivery from the conveyor shown in Fig. 1.

An alternative could be to effect a regular lowering of the entire units 66', when selected, but the pivoting is preferred because an activated unit may then start to receive a new article adapted for passing that unit, already before the unit has been completely swung up.

To the extent the operation can proceed under safe control the units 66' and even other diverter stations may be arranged with rather small pitch, whereby the sorter capacity for a given total length can be high. This may imply that there is correspondingly narrow space for the handling stations, and it could be possible, in that or other cases, to arrange for separate means of transportation from some or all of the receiving stations, e.g. from every second receiver station, to externally placed handling stations. In such stations the conditions will be to some degree the same as in the known cutting devises, viz. in that all arriving slices are destinated for that station; thus, no controllable bypass means should be used.

In Fig. 7 is shown a principally corresponding solution, where the belt 10 currently delivers its flow of articles 4 to a continuing, overlying suction belt 70, which at each receiver station has a piston plate 72 operable by a cylinder 74 or a corresponding moving mechanism so as to screen off the load suction ares of the belt, such that an article can be brought to a coordinated dropping down to an underlying collector unit, which, again, may comprise a mechanism for controlled stepwise displacement of a carrier plate for an article packing.

The means for stepwise displacing the carrier plates may be controllable in such a manner that the plates are displaced more or less all according to the size of the received articles. Hereby it will be possible, as the need arises, to arrange for a grouping of many small articles of fewer and larger articles for better utilization of the plate. Normally, differences in size will be detectable through the registered weight, but optionally the dynamic weight 2 may be supplemented or at the extreme even be replaced by a vision unit for detecting the article sizes.

The invention is not limited to the said basic principle for the build-up of the article portions, viz. the formation of portions with a predetermined weight; by way of example it will also be possible to build up, on selected plates, portions of articles of identical weights. Thereby the different portions may have different weights, but since the total weight of the articles in each portion has been accurately registered by the computer this may used to the effect that at the exit of the single stations or at a common exit from the entire system it will be possible to produce an automatic weight stamping and, optionally, a price stamping on the single packings. Also, it will be possible to effect a stamping indicative of the number of articles in the packings.

A further possibility will be that the different stations may operate selectively based on different criteria, e.g. some stations with the forming of portions of large articles up to a predetermined total weight and number of articles, others with articles of different sizes up to a predetermined weight or a predetermined number of articles, and still others with uniform articles to a variable total weight. Additionally, there may be one or more stations dealing with non-current articles, even without any ordered grouping or piling.

As already indicated it will be possible to use a vision unit for inspecting the articles passing by. If the articles are known to be of exactly the same thickness, it may be superfluous to use a weighing unit in the system, when the weight per area unit is known. With an added vision unit it will be possible to work with different kinds of articles at the same time, even based on different colours.

The grouping referred to should be understood in a wide sense, as it may also comprise a simple piling or, by way of example, a deposition into sections of an assortment packing. In a broader perspective the invention will comprise any kind of handling or working of the articles successively delivered to the single stations, irrespectively of their type and the detailed circumstances pertaining to their delivery from the main conveyor belt or a conveyor equivalent therewith. The articles will have been supplied according to some relevant criterion, and what is essential is that the batcher or sorter system is utilized for an orderly transfer for the selected articles to the receiver stations, in which the articles - as a consequence of their orderly or well defined transfer - may be handled or further treated by automatically operating means.

It should be emphasized that the said stepwise displacement of the carrier plates will not be restricted to a linear movement. According to the desired grouping pattern the movements may be directed in a variety of directions, also rearwardly, laterally and rotationally. The support element serving to receive the transferred articles should not necessarily be the final packing carrier plates, as the grouping may be arranged on a support belonging to the handling system, with a subsequent collective transfer of the groups to final carrier plates for incorporation in the packing products. It is even to be aforeseen that the nicely grouped article portions can be delivered to sheet packings without any included carrier plate.

## Claims

1. A method of forming weighed portions of foodstuff articles arranged in an orderly pattern, e.g. slices (4)of salmon or ham placed in imbricated formation on a carrier plate (48), characterized by the combination of effecting a supply of the articles (4) to a plurality of grouping stations (11), based on an infeed flow of mutually spaced articles, which, after passage of a dynamic weighing unit (6,8) and thereafter in a manner controlled by that unit, are selectively brought out to the different grouping stations for building up therein article groups of a known total weight, and of utilizing the single grouping stations (11) as stations for an automatical laying out of the more or less regularly arriving articles (4) in portions with any desired special grouping pattern of the articles, the portions preferably being arranged on support means constituted by removable carrier units for use in sales packings, e.g. the said carrier plates, or on receiver support means for collective transfer of the portions to packing related carrier means.

2. A system for forming article portions by the method according to claim 1, comprising infeed conveying means with a dynamic weighing unit, a sorter system with a plurality of receiver stations and with means for selectively feeding articles from the dynamic weighing unit to the plurality of the receiver stations for weight controlled joining of articles in the receiver stations, each of these stations having handling means for successively receiving the arriving articles and transferring them in an orderly manner to be laid out on suitable support means.

3. A system according to claim 2, in which the sorter system is of the grader or batching type, i.e. having a sorting conveyor (10) extending in continuity of a weighing station (6,8), on which conveyor the successively weighed articles (4) are advanced along a row of receiver stations (11), at which diverter means are provided for selectively transferring articles on the conveyor to the single receiver stations (11), and in which the said diverter means are so adapted that they are operable to actively grip the articles (4) on the conveyor and displace the gripped articles, independently of the conveyor motion, to the respective handling means.

4. A system according to claim 3, in which the diverter means, preferably made as mechanical gripping means (20,22; 40,42), are arranged so as to convey the gripped articles to handling means located overhead the sorting conveyor (10).

5. A system according to claim 3, in which the diverter means, preferably made as suction cups (52,62), are arranged so as to transfer the articles to handling means located laterally of the sorting conveyor.

6. A system according to claim 2, in which the sorter system comprises a sectionized conveyor (Fig. 6), the successive sections of which are individually pivotal to enable a selective direct transfer of articles to the handling means.

7. A system according to claim 6, in which the sections (66) are downwardly and/or upwardly pivotable.

8. A system according to claim 2, in which the sorter system comprises a downwardly facing conveyor surface (Fig. 7), against which the articles are held by suction, and in which the conveyor surface is moved along a row of underlying handling means, to which the articles may be dropped selectively by local suppression of the suction.

9. A system according to claim 2, in which the support means comprise a magazine (58) for said carrier units (48) and means for releasing a loaded carrier unit and supplying a new carrier unit from the magazine in response to a control signal from a control unit associated with the weighing unit.

10. A system according to claim 2, in which the handling means operate so as to deposit each gripped article in a fixed position relative to underlying means for operatively displacing a carrier unit (48), on which the gripped articles are successively deposited.

11. A system according to claim 2, in which the handling means operate so as to deposit each gripped article on a stationary carrier unit (48) in a position thereon displaced from the position of the previously deposited article (Fig. 4).

## Patentansprüche

1. Verfahren zum Bilden abgewogener Portionen von Lebensmittelartikeln, die in einem regelmäßigen Muster angeordnet sind, z.B. Scheiben (4) von Lachs oder Schinken, die in einer überlappenden Anordnung auf einer Trägerplatte (38) angeordnet sind, gekennzeichnet durch die Kombination des Bewirkens einer Zufuhr der Artikel (4) zu einer Mehrzahl von Gruppierungsstationen (11), basierend auf einem Vorschubfluß von wechselseitig beabstandeten Artikeln, die nach dem Passieren einer dynamischen Wiegeeinheit (6, 8) und danach in einer Art und Weise kontrolliert durch diese Einheit, selektiv zu den unterschiedlichen Gruppierungsstationen zur Bildung von Artikelgruppen eines bekannten Gesamtgewichts ausgebracht werden und der Verwendung der einzelnen Gruppierungsstationen (11) als Stationen für ein automatisches Auslegen der mehr oder weniger regelmäßig ankommenden Artikel (4) in Portionen mit irgendeiner gewünschten speziellen Gruppierungsanordung der Artikel, wobei die Portionen vorzugsweise auf den Unterstützungsmitteln angeordnet werden, die aus entfernbaren Trägerplatten gebildet werden zur Verwendung in Verkaufspackungen z.B. den Trägerplatten, oder auf Empfängeruntersrützungsmitteln zum kollektiven Transport der Portionen zu packungsbezogenen Trägermitteln.

2. System zum Bilden von Artikelportionen durch das Verfahren nach Anspruch 1, umfassend Vorschubfördermittel mit einer dynamischen Wiegeeinheit. einem Sortierungssystem mit einer Mehrzahl Empfängerstationen und mit Mitteln zur selektiven Zufuhr von Artikeln von der dynamischen Wiegeeinheit zu der Mehrzahl der Empfängerstationen für eine gewichtskontrollierte Verbindung von Artikeln in der Empfängerstation, wobei jede dieser Stationen Fördermittel zum aufeinanderfolgenden Empfangen der ankommenden Artikel und Übertragen derselben in einer gleichmäßigen Art und Weise aufweisen, um auf geeigneten Unterstützungsmitteln ausgelegt zu werden.

3. System nach Anspruch 2, in dem das Sortierungssystem vom Sortiermaschinen- oder Aufwicklemaschinentyp ist, d. h. mit einem Sortierförderer (10), der sich in Fortsetzung einer Wiegestation (6, 8) erstreckt und dem die aufeinanderfolgend gewogenen Artikel (4) entlang einer Reihe Empfängerstationen (11) vorgeschoben werden, an denen Trennmittel zum selektiven Transport der Artikel auf dem Förderer zu den einzelnen Empfängerstationen (11) vorgesehen sind und in denen die Trennmittel so angepaßt sind, daß sie zum aktiven Greifen der Artikel (4) auf dem Förderer bedienbar sind und die gegriffenen Artikel unabhängig von der Fördererbewegung zu den entsprechenden Fördermitteln versetzen.

4. System nach Anspruch 3, in dem die Trennmittel, vorzugsweise als mechanische Greifmittel (20, 22; 40, 42) ausgebildet, angeordnet sind, um die gegriffenen Artikel zu über dem Sortierungsförderer (10) gelegenen Fördermitteln zu fördern.

5. System nach Anspruch 3, in dem die Trennmittel, vorzugsweise als Saugnäpfe (52, 62) ausgebildet, angeordnet sind, um die Artikel zu lateral zu dem Sortierungsförderer angeordneten Fördermitteln zu transportieren.

6. System nach Anspruch 2, in dem das Sortierungssystem einen unterteilten Förderer (Fig. 6) umfaßt, dessen fortlaufenden Abschnitte individuell drehbar sind um einen selektiven direkten Transport der Artikel zu den Fördermitteln zu ermöglichen.

7. System nach Anspruch 6, in dem die Abschnitte (66) abwärts und/oder aufwärts drehbar sind.

8. System nach Anspruch 2, in dem das Sortierungssystem eine nach unten gerichtete Förderoberfläche (Fig. 7) umfaßt, gegen die die Artikel durch Saugen gehalten werden, und in dem die Förderoberfläche entlang einer Reihe von darunterliegenden Fördermitteln bewegt wird, zu dem die Artikel durch ein lokales Unterdrücken des Saugens selektiv fallengelassen werden können.

9. System nach Anspruch 2, in dem die Unterstützungsmittel ein Magazin (58) für die Trägereinheiten (48) umfassen und Mittel zum Freilassen einer beladenen Trägereinheit und Liefern einer neuen Trägereinheit von dem Magazin in Reaktion/Antwort auf ein Steuersignal von einer Steuereinheit, die mit der Wiegeeinheit verbunden ist.

10. System nach Anspruch 2, in dem die Fördermittel arbeiten, um jeden gegriffenen Artikel in einer festen Position relativ zu den darunterliegenden Mitteln zum wirksamen Umsetzen einer Trägereinheit (48), auf der die gegriffenen Artikel aufeinanderfolgend abgelegt werden, zu hinterlegen.

11. System nach Anspruch 2, in dem die Fördermittel arbeiten, um jeden gegriffenen Artikel auf einer stationären Trägereinheit (48) in einer Position versetzt zu der Position des vorangegangenen abgelegten Artikels (Fig. 4) abzulegen.

## Revendications

1. Procédé pour former des portions pesées d'articles de produits alimentaires agencés selon une configuration ordonnée, par exemple des tranches (4) de saumon ou de jambon placées en formation imbriquée sur un plateau de support (48),
caractérisé par la combinaison d'effectuer une alimentation des articles (4) vers une pluralité de postes de groupage (11), basée sur un flux d'amenée d'articles mutuellement espacés qui, après passage d'une unité de pesage dynamique (6, 8) et par la suite d'une manière commandée par cette unité, sont amenés sélectivement vers les différents postes de groupage pour former dans ceux-ci des groupes d'articles d'un poids total connu, et d'utiliser les postes de groupage individuels (11) comme postes pour disposer automatiquement les articles (4) arrivant plus ou moins régulièrement en portions avec une quelconque configuration de groupage spéciale, souhaitée, des articles, les portions étant de préférence agencées sur des moyens de support constitués par des unités porteuses amovibles pour une utilisation dans des emballages de vente, par exemple lesdits plateaux de support, ou sur des moyens de support de réception pour le transfert collectif des portions vers des moyens de support d'emballage correspondants.

2. Système pour former des portions d'articles par le procédé selon la revendication 1, comprenant des moyens de transport d'amenée ayant une unité de pesage dynamique, un système de triage ayant une pluralité de postes de réception et ayant des moyens pour amener sélectivement les articles de l'unité de pesage dynamique vers la pluralité des postes de réception pour assembler des articles de poids contrôlé dans les postes de réception, chacun de ces postes ayant des moyens de manoeuvre pour recevoir successivement les articles arrivant et pour les transférer d'une manière ordonnée pour être déposés sur des moyens de support appropriés.

3. Système selon la revendication 2, dans lequel le système de triage est du type par classement ou par groupage, c'est-à-dire ayant un transporteur de triage (10) s'étendant en continuité d'un poste de pesage (6, 8), sur lequel transporteur les articles pesés successivement (4) sont avancés le long d'une rangée de postes de réception (11), sur lesquels des moyens de dérivation sont prévus pour transférer sélectivement les articles sur le transporteur vers les postes de réception individuels (11), et dans lesquels lesdits moyens de dérivation sont agencés de façon qu'ils puissent fonctionner pour saisir activement les articles (4) sur le transporteur et déplacer les articles saisis, indépendamment du mouvement du transporteur, vers les moyens de manoeuvre respectifs.

4. Système selon la revendication 3, dans lequel les moyens de dérivation, de préférence réalisés comme des moyens de préhension mécaniques (20, 22 ; 40, 42), sont agencés de façon à transporter les articles saisis vers les moyens de manoeuvre situés au-dessus du transporteur de triage (10).

5. Système selon la revendication 3, dans lequel les moyens de dérivation, de préférence réalisés comme des coupelles d'aspiration (52, 62), sont agencés de façon à transférer les articles vers les moyens de manoeuvre situés latéralement par rapport au transporteur de triage.

6. Système selon la revendication 2, dans lequel le système de triage comprend un transporteur divisé (figure 6), dont les sections successives sont pivotantes individuellement pour permettre un transfert direct sélectif des articles vers les moyens de manoeuvre.

7. Système selon la revendication 6, dans lequel les sections (66) peuvent pivoter vers le bas et/ou vers le haut.

8. Système selon la revendication 2, dans lequel le système de triage comprend une surface de transporteur faisant face vers le bas (figure 7), contre laquelle les articles sont maintenus par aspiration, et dans lequel la surface du transporteur est déplacée le long d'une rangée de moyens de manoeuvre sous-jacents, vers lesquels les articles peuvent chuter sélectivement par suppression locale de l'aspiration.

9. Système selon la revendication 2, dans lequel les moyens de support comprennent un magasin (58) pour lesdites unités de support (48) et des moyens pour libérer une unité de support chargée et fournir une nouvelle unité de support à partir du magasin en réponse à un signal de commande d'une unité de commande associée à l'unité de pesage.

10. Système selon la revendication 2, dans lequel les moyens de manoeuvre fonctionnent de façon à déposer chaque article saisi dans une position fixe par rapport à des moyens sous-jacents pour déplacer de façon opératoire une unité de support (48) sur laquelle les articles saisis sont successivement déposés.

11. Système selon la revendication 2, dans lequel les moyens de manoeuvre fonctionnent de façon à déposer chaque article saisi, sur une unité de support immobile (48) dans une position sur celle-ci déplacée de la position de l'article déposé préalablement (figure 4).
